# DEMANDE DE BREVET EUROPEEN

(11) **EP 0 963 705 A1**
(43) Date de publication de la demande: **15.12.1999**
(21) Numéro de dépôt: 98201455.7
(22) Date de dépôt: 07.05.1998
(51) Int. Cl.: A23L 1/168

(54) **Flocon de céréales comprenant des inclusions de grains de céréales entiers ou fragmentés, et procédé de fabrication**

(71) Demandeur: SOCIETE DES PRODUITS NESTLE S.A., 1800 Vevey (CH)
(72) Inventeur: Soro, Mamadou, Abidjan 23 (CI); Ansermet, François, Abidjan 01 (CI)
(74) Mandataire: Vuille, Roman

(57) **Abrégé**

Aliment déshydraté à base de céréales décortiquées, sous forme de flocons précuits comprenant des grains de céréales entiers ou fragmentés, écrasés et des grains de céréales entiers ou fragmentés, écrasés dans un mélange pulvérulent à base de farine de céréale, ledit aliment une fois réhydraté présentant une structure particulaire hétérogène.

## Description

### Domaine technique

La présente invention a pour objet un aliment déshydraté à base de céréales décortiquées, sous forme de flocons précuits. Elle a également pour objet le procédé de préparation de cet aliment.

### Résumé de l'état de la technique

Les aliments à base de céréales sont traditionnellement une base de l'alimentation humaine sur tous les continents, en particulier grâce à l'apport calorique élevé de ces produits.

Le continent africain est un grand consommateur de bouillies ou porridges préparés manuellement à partir de farines de céréales tropicales telles que le millet, le sorgho, le maïs ou le riz.

Les aliments déshydratés à base de céréales, sous forme de flocons sont nombreux et sont généralement préparés à partir de farines de céréales. Le document GB 2100111 décrit un procédé de préparation de flocons à partir de grains de céréales préalablement moulus.

Le document EP-A-0672353 décrit un aliment déshydraté à base de céréales préparé à partir de grains entiers de céréales. Les grains sont partiellement décortiqués ou utilisés tels quels, ce qui a des effets sur les propriétés nutritionnelles et sensorielles du produit final. Selon EP-A-0672353, le retrait total de l'enveloppe ne peut être envisagé, d'une part sur le plan technique et d'autre part parce que le produit obtenu n'aurait plus la consistance recherchée, liée à la présence des grains entiers.

La présente invention se propose de préparer un aliment déshydraté à base de céréales, qui présente une structure particulaire hétérogène et une consistance de type porridge, à partir de grains entiers de céréales complètement décortiqués; les grains de céréales conservent leur aspect de grains entiers.

### Résumé de l'invention

A cet effet, l'aliment déshydraté à base de céréales décortiquées, sous forme de flocons précuits selon la présente invention comprend en mélange des grains de céréales entiers ou fragmentés, écrasés et des grains de céréales entiers ou fragmentés, écrasés dans un mélange pulvérulent à base de farine de céréale, ledit aliment une fois réhydraté présentant une structure particulaire hétérogène.

L'aliment selon la présente invention, une fois réhydraté, présente une texture particulière de type porridge; à l'état déshydraté il reste stable plusieurs mois, sans altération de ses qualités nutritionnelles et organoleptiques. Il est consommé après une cuisson rapide à n'importe quel repas de la journée.

Un autre objet de l'invention est un procédé de préparation de l'aliment déshydraté à base de céréales décortiquées, sous forme de flocons dans lequel,
i) on prépare une soupe comprenant de la farine de céréale, une matière liante, du sucre, une matière grasse et des grains de céréales décortiqués, entiers ou fragmentés, préalablement réhydratés.
ii) on cuit la soupe,
iii) on compresse et l'on séche ladite soupe en un film que l'on réduit ensuite en flocons.

Le présent procédé permet de préparer un flocon composite, c'est à dire comprenant des grains de céréales décortiqués entiers ou fragmentés, écrasés dans une matrice à base de farine. Il est facile à mettre en oeuvre, économique et possède également l'avantage de compresser et sécher les flocons en une seule étape.

### Description détaillée

L'aliment déshydraté à base de céréales décortiquées, sous forme de flocons précuits selon la présente invention est un mélange de grains de céréales entiers ou fragmentés, écrasés et de grains de céréales entiers ou fragmentés, écrasés dans un mélange pulvérulent à base de farine et de flocons de mélange pulvérulent seuls.

La proportion de flocons contenant des grains de céréales écrasés est au minimum de 30% en poids par rapport au poids du mélange final. Ces flocons peuvent se présenter sous forme de fines paillettes dont la taille varie de 2 à 4 mm avec une épaisseur comprise entre 0,5 et 1 mm au niveau des grains écrasés, selon le type de grain de céréale utilisé et de 0,4 à 0,7 mm entre les grains. Leur densité peut être comprise entre 150 et 300 g/l, avec un pourcentage d'humidité d'environ 5 à 6%.

Les grains de céréales sont de préférence choisis parmi des céréales tropicales du type mil, maïs, riz ou sorgho. Ils contribuent à la texture finale du produit mais apportent également le goût caractéristique recherché.

Une partie desdits grains de céréales écrasés sont liés dans un mélange pulvérulent à base de farine. Ce mélange pulvérulent peut être constitué de farine de céréale, de sucre, de matières grasses et d'une matière liante.

La farine de céréale est de préférence choisie de manière à ce que la farine et les grains entiers proviennent du même type de céréale. A cet effet, les flocons à base de mil renferment des grains entiers de mil écrasés dans un mélange à base de farine de mii, ce qui permet de renforcer le goût typique desdits flocons. Dans le cas des flocons de maïs, par exemple, on utilise de préférence de la farine de maïs blanc.
La farine permet de donner une certaine consistance au produit final. La quantité de farine dans le mélange pulvérulent peut représenter 5 à 15% en poids par rapport au poids sec total.

Du sucre est ajouté au mélange. IL a un rôle de liant et de plastifiant. La quantité de sucre ajoutée est de 5 à 15% en poids par rapport au poids sec total.

La matière grasse apporte une texture onctueuse au produit une fois réhydraté. Elle peut être apportée sous forme d'huile de palme, par exemple, à raison de 1 à 5% en poids.

La matière liante peut être une matière amylacée, une gomme ou une hémicellulose, par exemple. On utilisera de préférence une matière amylacée prégélatinisée, telle que la fécule de manioc prégélatinisée. La proportion de la matière liante peut varier de 1 à 10% en poids par rapport au poids total.

Un agent antioxydant peut éventuellement être ajouté au mélange pulvérulent car les produits secs à base de mil ont tendance à développer un goût de rance pendant le stockage. En effet, le mil contient jusqu'à 4 à 6% de matières grasses avec une teneur en acides gras insaturés élevée. On choisira de préférence du phosphate disodique qui est de préférence ajouté en mélange humide, dans des proportions de 0,5 à 1% en poids par rapport au poids total.

Des additifs peuvent être ajoutés auxdits flocons. Ces additifs sont par exemple des vitamines, des arômes, du sucre ajouté ou des minéraux, tels que calcium, potassium ou fer par exemple.
Pour les flocons natures sucrés, on ajoute le sucre de préférence à raison de 30 à 40 % en poids par rapport au poids final du mélange.
Des agents aromatisants peuvent être utilisés, ce sont par exemple le gingembre, le citron, la pomme, la fraise et la vanille. Ils peuvent être combinés et sont ajoutés de préférence à raison de 0,05 à 1% en poids par rapport au poids du mélange total.
Dans le cas des flocons à base de maïs, il est possible d'obtenir un goût acide en ajoutant de l'acide citrique par exemple, à raison de 0,5 à 1,5% en poids par rapport au mélange total.

Les flocons selon la présente invention restent stables plusieurs mois et sont consommés après réhydratation, de préférence par une cuisson rapide des flocons pendant 5 à 7 minutes ou simple addition d'eau chaude à 50-100°C, de lait ou autre liquide alimentaire.

Après cuisson, l'aliment selon l'invention présente une structure particulaire hétérogène qui se caractérise par une consistance et un aspect de type porridge.

L'aliment déshydraté sous forme de flocons est préparé par le procédé suivant, qui consiste à:
i) préparer une soupe comprenant de la farine de céréale, une matière liante, du sucre, une matière grasse et des grains de céréales décortiqués, entiers ou fragmentés, préalablement réhydratés.
ii) cuire la soupe,
iii) compresser et sécher ladite soupe en un film qui est ensuite réduit en flocons.

Pour mettre en oeuvre le présent procédé, on prépare une soupe contenant les ingrédients pulvérulents tels que décrits précédemment.

Pour la préparation de la soupe, on utilise de préférence un mélangeur de type cuve avec agitateur. On prépare la soupe de base en mélangeant dans de l'eau: les ingrédients pulvérulents et les grains de céréales entiers ou fragmentés préalablement traités. La proportion des grains dans la soupe peut varier de 35 à 70% en poids.
La soupe peut également être préparée en continu par dosage en ligne des différents ingrédients.

Le traitement des grains de céréales consiste à les nettoyer afin d'éliminer la poussière, les pierres et autres débris, le cas échéant. Ils sont ensuite décortiqués, la peau ayant un effet négatif sur la texture et sur le goût du produit, elle peut également contenir des composés anti-nutritionnels qu'il est préférable d'éliminer, les polyphénols par exemple. Le décorticage peut être réalisé par abrasion, par exemple.
Dans le cas où la céréale utilisée est le maïs, la préparation consiste de préférence à nettoyer les grains, les décortiquer, les dégermer puis les fragmenter en gruaux de 1 à 4 mm ou en semoule, selon le produit final désiré.

Les grains décortiqués peuvent alors être ramollis, par trempage dans de l'eau pendant une durée minimum de 1 heure et de préférence 2 à 6 heures à température ambiante. Les grains peuvent ensuite être égouttés de 10 à 15 minutes, par exemple.

La soupe obtenue après ajout desdits grains ramollis peut être homogénéisée à grande vitesse pendant quelques secondes, par exemple. Elle a une teneur en eau de préférence comprise entre 50 et 55%.

Les grains peuvent alors être transportés par pompage de la soupe qui est alors cuite en continu en tube, par exemple par injection de vapeur à 120-130°C de 4 à 6 minutes selon le type de céréale, et en particulier jusqu'à gélatinisation de la matière amylacée.

La soupe est ensuite séchée. Le séchage est effectué de préférence sur des rouleaux et plus particulièrement sur des sécheurs bicylindres. Cette technique a également l'avantage de permettre de réaliser la compression et le séchage en une seule étape. L'écartement entre les rouleaux de séchage peut varier entre 0,3 et 0,65 mm et de préférence de 0,45 à 0, 60 mm. L'épaisseur du film ainsi obtenu peut être compris entre 0,5 et 1,0 mm au niveau des grains et de 0,4 à 0,7 mm entre les grains.

Après séchage, le pourcentage d'humidité du film est de préférence compris entre 5 et 6%; pour cela le film est éventuellement séché rapidement, de préférence sous un courant d'air chaud.

Le film sec est ensuite réduit en flocons dont la densité apparente est de préférence comprise entre 150 et 300 g/l. Les flocons peuvent être ensuite mélangés à sec avec du sucre ou des arômes dans un mixer, par exemple.

Le procédé selon la présente invention permet d'obtenir un aliment déshydraté à base de céréales décortiquées, sous forme de flocons précuits comprenant des grains de céréale entiers ou fragmentés, écrasés dans une matrice à base de farine. Il présente également l'avantage d'être simple, rapide et économique.

Les exemples décrits ci-dessous ne sont pas limitatifs et servent à illustrer l'invention. Les pourcentages et les parties sont indiqués en poids.

### Exemple 1, flocons de millet

On met à tremper 50 kg de grains entiers de millet préalablement décortiqués par abrasion, dans un bac contenant de l'eau pendant 4 heures à température ambiante, dans une proportion grains:eau de 1:2. Les grains détrempés sont alors égouttés de 10 à 15 minutes sur une assiette perforée de trous de 1 à 1,25mm.
Dans une cuve munie d'un agitateur, on prépare une soupe en ajoutant successivement à 37,5 l d'eau, 0,33kg de phosphate disodique, 6,7 kg de sucre, 7,9 kg de farine de millet, 5,8 kg de flocons de manioc prégélatinisés et 2,5 kg d'huile de palme. On maintient une légère agitation pendant la phase de mélange puis on poursuit le mixage à faible vitesse pendant 60 secondes de manière à obtenir une soupe homogène. Puis, on ajoute les grains de millet ramollis à la soupe et on mixe à forte vitesse pendant 10 secondes, puis 1 minute à faible vitesse. On cuit alors la soupe contenant les grains entiers de millet par injection de vapeur à 120°C pendant 4 à 5 minutes. La quantité de matière sèche de la soupe obtenue après cuisson et flash est de 44-48%. On sèche ensuite ladite soupe sur un sécheur bicylindre à 189°C, dont l'écartement entre les rouleaux est de 0,55 à 0,6 mm.
Le film obtenu a une épaisseur de 0,7-0,85mm au niveau des grains et de 0,6-0,65mm entre les grains. Son pourcentage d'humidité est de 5-6%. Si nécessaire le film est rapidement séché à l'air chaud pour atteindre ces valeurs. On réduit ensuite le film en flocons dans un moulin avec un tamis de 4 mm. Les flocons ont une densité comprise entre 200 et 250 g/l.

Pour obtenir un produit nature sucré, on mélange 65% de flocons de millet à 35% de sucre. Le mélange se fait à sec dans un mixer. Le produit final a une densité qui varie de 350 à 450 g/l.

Le produit déshydraté obtenu reste stable pendant plusieurs mois, il est consommable après une cuisson rapide de 5 à 7 minutes, qui permet d'obtenir un délicieux porridge nutritif. Le porridge obtenu peut être consommé tel quel ou avec du lait.

### Exemple 2, flocons de millet aromatisés

On prépare selon l'exemple 1, 64% de flocons de millet auxquels on ajoute, en mélangeant à sec dans un mixer:
- 34,3%: de sucre
- 0,80%: de poudre de gingembre
- 0,54%: de poudre de citron
- 0,36%: d'acide citrique.

### Exemple 3, flocons de maïs pour porridge

On nettoie des grains de mais, on enlève le germe, la peau et on les fragmente en gruaux de tailles comprises entre 1 et 4 mm. Puis on prépare des flocons à base de maïs selon le procédé décrit pour le millet dans l'exemple 1. Les proportions sont les suivantes:
50 kg de gruaux de maïs blanc sans germe, 7,2 kg de sucre, 6,8 kg de flocon de manioc prégélatinisés, 4,84 kg de farine de maïs blanc dégermé, 1,36 kg d'huile végétale, 0,4 kg de phosphate disodique et 50 l d'eau.

Pour obtenir un produit nature sucré, on mélange à sec dans un mixer 66% des flocons de maïs obtenus par le procédé tel que décrit dans l'exemple 1 pour les flocons de millet, avec 34% de sucre.

### Exemple 4, flocons de maïs pour porridge instantané

On prépare les grains de maïs blancs tel que décrit dans l'exemple 3, puis on les fragmente en semoule. La semoule est utilisée directement dans la soupe sans trempage préalable. Les proportions pour la préparation de la soupe sont les suivantes:
Farine de maïs blanc dégermé 48,8 kg, farine de semoule de maïs blanc dégermé 38,4 kg, 9,1 kg de sucre, 2,8 kg d'huile végétale, 0,9 kg de phosphate disodique et 108,2 l d'eau.
Pour obtenir un produit instantané, la soupe est cuite à 130°C de 5 à 6 minutes.
Au cours de l'étape de séchage sur rouleaux, l'écartement entre les rouleaux est réglé au minimum, 0,3-0,45 mm et le tamisage est effectué avec un tamis à 2 mm.

Les flocons de maïs obtenus sont alors mélangés à sec avec du sucre blanc à raison de 40 kg de flocons de maïs pour 20 kg de sucre.

On peut préparer une variante "acidifiée" en ajoutant 0,55 kg d'acide citrique et 20 kg de sucre à 40 kg de flocons de maïs.

## Revendications

1. Aliment déshydraté à base de céréales décortiquées, sous forme de flocons précuits comprenant des grains de céréales entiers ou fragmentés, écrasés et des grains de céréales entiers ou fragmentés, écrasés dans un mélange pulvérulent à base de farine de céréale, ledit aliment une fois réhydraté présentant une structure particulaire hétérogène.

2. Aliment selon la revendication 1, dans lequel les grains de céréales sont des grains de mil, maïs, sorgho ou riz.

3. Aliment selon la revendication 1, dans lequel la proportion de grains entiers écrasés est au minimum de 30% en poids par rapport au poids du produit fini.

4. Aliment selon la revendication 1, dans lequel le mélange pulvérulent comprend de la farine d'une céréale, de préférence la même que celle du grain, une matière liante, du sucre et une matière grasse.

5. Aliment selon la revendication 4, dans lequel la matière liante est un composé amylacé prégélatinisé et plus particulièrement des flocons ou fécules de manioc, une gomme ou une hémicellulose.

6. Aliment selon les revendications 1 à 5, comprenant des additifs tels que des vitamines, des minéraux, du sucre ajouté ou des arômes.

7. Procédé de préparation d'un aliment déshydraté à base de céréales décortiquées, selon la revendication 1 dans lequel,
i) on prépare une soupe comprenant de la farine de céréale, une matière liante, du sucre, une matière grasse et des grains de céréales décortiqués, entiers ou fragmentés, préalablement réhydratés.
ii) on cuit la soupe,
iii) on compresse et l'on séche ladite soupe en un film que l'on réduit ensuite en flocons.

8. Procédé selon la revendication 7 dans lequel la proportion de grains décortiqués de céréales, entiers ou fragmentés incorporés dans la soupe est comprise entre 35 et 70%.

9. Procédé selon la revendication 7 dans lequel la cuisson de la soupe se fait par injection de vapeur à 120-130°C pendant 4 à 6 minutes.

10. Procédé selon la revendication 7 dans lequel l'étape de compression et de séchage de la soupe cuite est réalisée sur rouleaux, de préférence par la technique des bicylindres.

11. Utilisation de l'aliment déshydraté selon les revendications 1 à 10, pour la préparation de bouillies ou porridges, ledit aliment étant consommé après une cuisson rapide ou par réhydratation dans un liquide alimentaire chaud.
